(19) Europäisches Patentamt
European Patent Office
Office européen des brevets

(11) Numéro de publication : **0 267 252 B1**

(12) **FASCICULE DE BREVET EUROPEEN**

(45) Date de publication du fascicule du brevet :
**23.10.91 Bulletin 91/43**

(51) Int. Cl.⁵ : **H02P 7/628, H02M 7/5387**

(21) Numéro de dépôt : **87903332.2**

(22) Date de dépôt : **20.05.87**

(86) Numéro de dépôt international :
**PCT/FR87/00166**

(87) Numéro de publication internationale :
**WO 87/07455 03.12.87 Gazette 87/27**

(54) **CONVERTISSEUR DE FREQUENCE POUR L'ALIMENTATION STABILISEE DE MOTEURS ASYNCHRONES.**

(30) Priorité : **21.05.86 FR 8607192**

(43) Date de publication de la demande :
**18.05.88 Bulletin 88/20**

(45) Mention de la délivrance du brevet :
**23.10.91 Bulletin 91/43**

(84) Etats contractants désignés :
**AT BE CH DE FR GB IT LI NL SE**

(56) Documents cités :
**EP-A- 0 075 357**
**EP-A- 0 159 000**
**US-A- 4 420 718**

(56) Documents cités :
**Proceedings of the International Conference on Electrical Machines, 18-21 septembre 1984, partie 3, ( IAUSANNE, CH ), T.Frank et al.: Microprocessor controled transistor voltage source inverter asynchronous motor drive , pages839-842 voir page 841, colonne de gauche, lignes 6-17, 23-32; figure 1**

(73) Titulaire : **TELEMECANIQUE**
**43-45, Boulevard Franklin Roosevelt**
**F-92504 Rueil-Malmaison Cedex (FR)**

(72) Inventeur : **GOUSSET, Alain**
**31, rue Charles Floquet**
**F-92500 Rueil Malmaison (FR)**

(74) Mandataire : **Marquer, Francis et al**
**Cabinet Moutard 35, Avenue Victor Hugo**
**F-78960 Voisins le Bretonneux (FR)**

## Description

La présente invention concerne un convertisseur statique de fréquence pour l'alimentation d'un moteur du type asynchrone, comprenant un pont redresseur susceptible d'être relié à un réseau polyphasé, un circuit intermédiaire de tension continue et un onduleur doté de six interrupteurs statiques montés en pont de Graetz, commandés par un dispositif à modulation d'impulsions et susceptibles d'être reliés aux impédances de phase du moteur.

Les moteurs asynchrones alimentés à partir de réseaux triphasés par l'intermédiaire de convertisseurs de fréquence présentent généralement une instabilité de fonctionnement lorsqu'ils sont faiblement chargés. On constate en effet l'apparition d'une oscillation du rotor du moteur due à un échange d'énergie entre le moteur et le circuit intermédiaire de tension continue dans une plage de fréquence d'environ 20 à 100 % de la fréquence nominale.

Il serait possible d'utiliser pour corriger une telle instabilité un asservissement de vitesse en recourant à un capteur de vitesse, ou encore des capteurs de courant sur les conducteurs de phase du moteur, mais de telles solutions sont coûteuses et nécessairement liées au moteur. On a également proposé, notamment dans le brevet US-4 420 718, d'utiliser un facteur de puissance du moteur, estimé à partir de la valeur du courant continu d'alimentation de l'onduleur, pour contrôler la tension de sortie dudit onduleur, de manière à maintenir le rapport tension/fréquence du courant alternatif produit par l'onduleur.

En effet, comme on le sait, la tension U et la fréquence F d'alimentation d'un moteur asynchrone alimenté par l'intermédiaire d'un convertisseur de fréquence doivent rester normalement liées par une loi déterminée, par exemple avec un rapport U/F constant.

Toutefois, cette solution demeure relativement complexe et coûteuse dans une plage de valeurs déterminée.

Un tel inconvénient affecte également le convertisseur décrit dans le brevet EP-0 159 000 qui effectue une correction de fréquence du courant alternatif produit par l'onduleur en fonction des composantes négatives et positives du courant continu qui alimente l'onduleur.

L'invention a plus particulièrement pour but de supprimer l'oscillation à basse fréquence du rotor d'un moteur asynchrone faiblement chargé en diminuant lorsque survient une telle oscillation la tension U d'alimentation du moteur afin de réduire momentanément le rapport U/F. Elle vise de plus à stabiliser l'entraînement du moteur à l'aide d'un dispositif simple, tout en assurant un bon compromis entre la qualité d'entraînement et la stabilité recherchée.

Elle a pour autre but de combiner la stabilisation recherchée à faible charge avec une limitation des courants du moteur lors de variations brutales de charge.

L'invention propose à cet effet un convertisseur de fréquence comprenant d'une façon analogue à celle décrite dans le brevet US-4 420 718 précité : un pont redresseur susceptible d'être relié côté entrée à un réseau polyphasé et côté sortie à un circuit intermédiaire de tension continue ; un onduleur susceptible d'être relié côté entrée au circuit intermédiaire et côté sortie aux impédances de phase d'un moteur asynchrone ; l'onduleur comprenant trois couples d'interrupteurs statiques aux bornes desquels est appliquée la tension continue, chaque couple comportant deux interrupteurs série dont l'un est dit de voie haute et l'autre dit de voie basse et qui sont munis chacun d'une diode de récupération en parallèle, le point milieu de chaque couple étant connecté à une impédance de phase du moteur ; un dispositif de commande des interrupteurs étant relié à ceux-ci pour leur appliquer des impulsions modulées en vue d'assurer leur fermeture et leur ouverture ; un organe de lecture du courant associé au circuit intermédiaire de tension continue, et délivrant un signal image du courant dans le circuit intermédiaire ; des moyens de traitement reliés à l'organe de lecture et agencés pour détecter des paramètres du signal ; et un moyen apte à agir sur le dispositif de commande des interrupteurs statiques pour modifier les tensions de sortie de l'onduleur, en fonction des paramètres détectés par les moyens de traitement.

Selon l'invention, ce convertisseur est caractérisé en ce que les susdits moyens de traitement délivrent un signal d'excès de courant inverse ST et comprennent un circuit de traitement relié à l'organe de lecture du courant et élaborant un signal crête filtré $I_d$ représentatif de la valeur crête du courant inverse et un comparateur comparant ce signal $I_d$ à une valeur de référence réglable $I_{REF}$ pour générer quand $I_d > I_{REF}$ le signal ST d'excès de courant inverse, et en ce que le moyen de modification des tensions de sortie de l'onduleur provoque un blocage alternatif du groupe d'interrupteurs de voie haute et/ou du groupe d'interrupteurs de voie basse de l'onduleur, lors de l'émission du signal ST d'excès de courant inverse.

L'excursion de tension obtenue par le susdit blocage permet de réduire le rapport U/F et de sortir de la zone d'instabilité.

Le moyen de diminution des tensions de sortie de l'onduleur peut coopérer avec le dispositif de commande des interrupteurs statiques de l'onduleur pour bloquer alternativement le groupe des interrupteurs de voie haute et/ou le groupe des interrupteurs de voie basse de manière synchrone à la modulation exercée sur chaque groupe d'interrupteurs. Il en résulte une bonne symétrisation des courants du moteur.

Dans un premier mode de réalisation, les moyens de traitement délivrent un signal d'excès de courant inverse ST et comprennent un circuit de traitement relié à l'organe de lecture du courant et élaborant un signal crête filtré $I_d$ représentatif de la valeur crête du courant inverse et un comparateur comparant ce signal à une valeur de référence réglable $I_{REF}$ pour générer quant $I_d > I_{REF}$ le signal ST d'excès de courant inverse applicable au moyen de diminution des tensions de sortie.

La réalisation du dispositif de stabilisation est dès lors très simple. Elle facilite de surcroît l'adjonction de moyens simples permettant une inhibition du signal ST lors du fonctionnement du moteur en génératrice et, le cas échéant, un blocage des interrupteurs de voie haute, ou basse ou alternativement de voie haute et de voie basse, lorsqu'on détecte un fort à-coup de charge en mode générateur.

Dans un deuxième mode de réalisation, les moyens de traitement comprennent un organe établissant la valeur moyenne du signal image du courant dans le circuit intermédiaire, ainsi qu'un convertisseur analogiquenumérique recevant le signal de valeur moyenne et délivrant un signal numérique ; le moyen de diminution de tension comprend un processeur muni de moyens d'échantillonnage du signal numérique et de moyens d'évaluation de l'amplitude et/ou de la fréquence d'oscillation du signal ; le dispositif de commande comprend des moyens de commande de modulation pour moduler la conduction des interrupteurs, les moyens d'évaluation d'oscillation agissant sur les moyens de commande de modulation pour corriger ladite modulation en fonction de l'oscillation du courant moyen dans le circuit intermédiaire. Le moyen de diminution de tension et le dispositif de commande peuvent avantageusement être implémentés dans un microprocesseur convenablement programmé.

La description faite ci-après en regard des dessins d'un exemple particulier de réalisation fera ressortir les caractéristiques et avantages de l'invention.

Au dessin annexé :

La figure 1 est le schéma d'un convertisseur statique de fréquence conforme à l'invention ;

La figure 2 montre une partie de schéma de la figure 1 dans un premier mode de réalisation ;

Les figures 2A, 2B, 2C sont des chronogrammes montrant respectivement les signaux image du courant dans le circuit intermédiaire, de sa composante de courant inverse et le signal de commande de stabilisation ;

La figure 3 représente un chronogramme d'une tension de phase en sortie de l'onduleur du convertisseur de la figure 1 ;

La figure 4 montre un exemple de cheminement du courant dans les voies basses de l'onduleur lors du blocage des voies hautes de celui-ci ;

La figure 5 représente schématiquement une forme d'exécution du circuit de stabilisation associé à l'onduleur ;

La figure 6 représente schématiquement un deuxième mode de réalisation du convertisseur de fréquence selon l'invention.

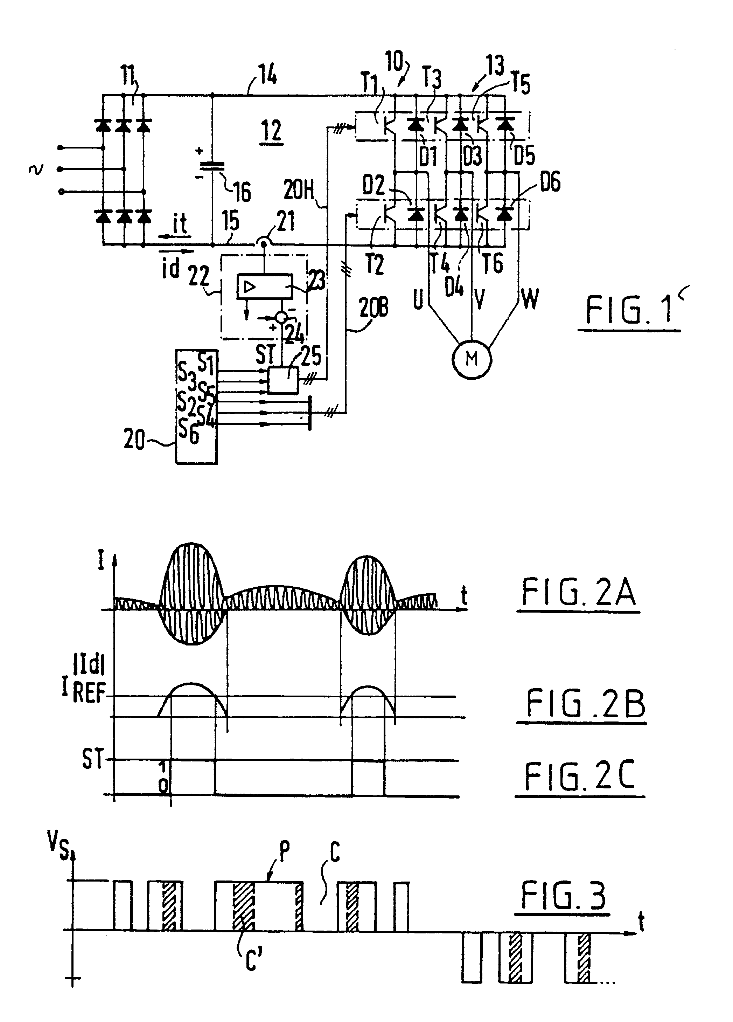

Le convertisseur statique de fréquence 10 illustré sur la figure 1 est relié à un réseau de tension alternative triphasé ou éventuellement monophasé. Le convertisseur est du type à onde de tension et comporte un pont redresseur triphasé 11, un circuit intermédiaire de tension continue 12 et un onduleur 13. Le pont redresseur 11 présente six diodes connectées aux phases du réseau de manière à délivrer en sortie une tension continue au circuit intermédiaire 12. Ce dernier comprend deux conducteurs 14, 15 respectifs de voie haute et de voie basse entre lesquels est disposé un condensateur 16 de filtrage. La polarité aux bornes du condensateur 16 reste constante.

L'onduleur 13 est relié, côté entrée, aux conducteurs 14, 15 et, côté sortie, aux conducteurs de phase U, V, W d'un moteur asynchrone M. Le moteur pourrait également être un moteur asynchrone synchronisé.

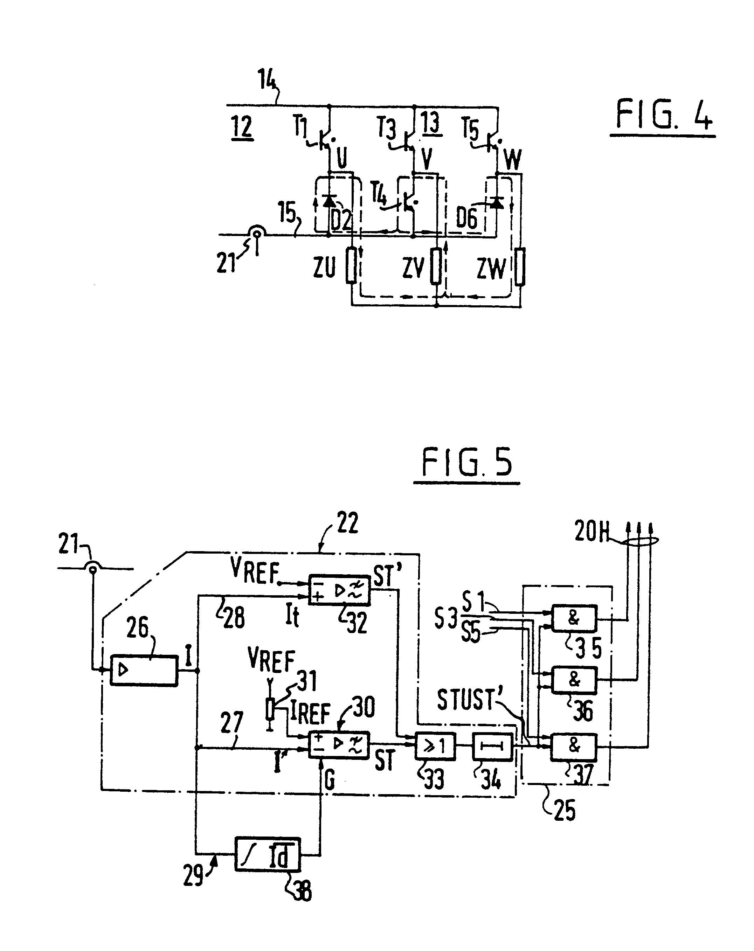

L'onduleur comprend six interrupteurs statiques commandés, montés en pont de Graetz et constitués dans le présent mode de réalisation par trois couples de transistors bipolaires T1-T6 en parallèle auxquels sont disposées des diodes respectives D1-D6 de récupération. Chaque couple de transistors comporte deux transistors cascadés T1, T2 ; T3, T4 ; T5, T6 dont l'un T1, T3, T5 est dit de voie haute et l'autre T2, T4, T6 dit de voie basse. Le point milieu de chaque couple est connecté à une impédance statorique respective ZU, ZV, ZW du moteur (voir figure 4). Les interrupteurs commandés de l'onduleur peuvent être des thyristors blocables (GTO) ou non blocables (SCR) à commutation éventuellement assistée ou encore des transistors à grille isolée, ou des composants MOS-bipolaires.

Les bases des transistors de voie haute T1, T3, T5 sont commandées via des conducteurs respectifs 20H par les sorties S1, S3, S5 d'un dispositif 20 de commande. Les bases des transistors de voie basse T2, T4, T6 sont commandées via des conducteurs 20B par les sorties S2, S4, S6 du dispositif 20. Ce dispositif est, par exemple, un microprocesseur, agencé pour générer sur ses sorties les impulsions à largeur modulée (PWM) nécessaires pour solliciter les bases des transistors en fonction des informations fournies aux entrées du microprocesseur par des boucles de régulation ou d'asservissement non représentées.

Selon l'invention, il est prévu un organe de lecture du courant 21 dans le circuit intermédiaire 12. Cet organe délivre un signal I image du courant et il est relié à des moyens de traitement 22 qui dans l'exemple de la figure 2 élaborent un signal crête filtré $I_d$ image du courant inverse et qui engendrent un signal de commande de stabilisation ST représentatif d'un courant inverse excessif. L'organe 21 capte le courant du conducteur 15, mais il pourrait bien sûr être associé au conducteur 14. L'organe de lecture du courant 21 est présentement constitué par une résistance, mais peut être tout capteur d'intensité approprié.

Les moyens de traitement 22 sont reliés à un moyen 25 de diminution des tensions de sortie de l'onduleur. Dans l'exemple de la figure 2, les moyens de traitement 22 comprennent un circuit de traitement 23 qui délivre le signal $I_d$ image du courant inverse et un comparateur 24. Le circuit de traitement 23 extrait du signal I délivré par l'organe 21 la composante $I_d$ représentative du courant inverse $i_d$ généré via l'onduleur notamment lors des oscillations du moteur. Ce courant inverse peut également être appelé courant "diode" puisqu'il traverse les diodes de récupération de l'onduleur.

Le comparateur 24 compare le signal $I_d$ image du courant inverse à une valeur de référence $I_{REF}$ pour produire le signal de commande de stabilisation ST lorsque $I_d > I_{REF}$. La valeur de référence $I_{REF}$ est de préférence réglable pour permettre notamment d'adapter la stabilisation au moteur alimenté par le convertisseur de fréquence et/ou à la charge entraînée.

Le signal de commande de stabilisation ST obtenu à la sortie du comparateur 24 est appliqué au moyen 25 de diminution des tensions de sortie de l'onduleur. Ce moyen de diminution est présentement constitué par un circuit logique ou des interrupteurs statiques bloquant pendant le changement d'état de la sortie ST du comparateur les impulsions normalement délivrées par les sorties S1, S3, S5 du microprocesseur associées aux voies hautes de l'onduleur. Le circuit logique 25 pourrait bien entendu en variante bloquer les sorties S2, S4, S6 correspondant aux voies basses de l'onduleur. Lorsque les interrupteurs statiques de l'onduleur sont des thyristors blocables (GTO), le circuit logique 25 peut également commander le forçage de conducteurs d'extinction des GTO.

Les signaux I, $I_d$ et ST sont illustrés sur les figures 2A, 2B, 2C, tandis que la forme de la tension découpée Vs apparaissant à la sortie de l'onduleur sur une phase est représentée figure 3 ; le cheminement du courant de circulation lors du blocage des voies hautes est illustré par la figure 4.

La tension Vs se compose de groupes alternativement positifs et négatifs d'impulsions P de largeur variable (figure 3). Chaque impulsion correspond à l'état passant simultané, sous l'effet des signaux correspondants sur les conducteurs 20H, 20B, d'un transistor de voie haute et d'un transistor de voie basse. Les impulsions P sont séparées par des créneaux C de largeur variable. Lorsqu'une instabilité de fonctionnement survient, par exemple du fait que le moteur asynchrone est peu chargé, le courant dans le circuit intermédiaire prend l'allure illustrée sur la figure 2A. La partie positive du signal I est un signal image du courant moteur ou courant dans les transistors, la partie négative du signal I étant le signal image du courant inverse ou courant "diode". Le circuit de traitement 23 extrait de I le signal crête filtré $I_d$ qui est comparé à $I_{REF}$ (figure 2B) dans le comparateur 24, celui-ci délivrant à sa sortie le signal ST (figure 2C).

Le moyen 25 qui reçoit d'une part le signal ST et, d'autre part, les signaux S1, S3, S5 assure une succession de brefs blocages de l'ensemble des transistors de voie haute de l'onduleur ; il en résulte un découpage supplémentaire de la tension Vs par des créneaux C' pratiqués dans les impulsions P.

Sur la figure 4, on suppose que les transistors T1, T3, T5 des voies hautes sont bloqués par des signaux appropriés sur les conducteurs 20H et que l'on se place à l'instant où les signaux des conducteurs 20B commandent la fermeture de T4 et le blocage de T2 et T6. On constate que le courant circule entre le transistor T4 et les diodes antiparallèles de récupération D2 et D6. La tension entre phases est nulle. D'une manière plus générale, en cas de blocage de l'un des groupes de voies de l'onduleur, le trajet du courant de circulation est bouclé sur l'un des transistors et sur les diodes de récupération associées aux deux autres transistors de l'autre groupe de voies.

Dans le mode de réalisation de la figure 5, le signal délivré par l'organe de lecture du courant 21 est amplifié par un amplificateur 26 puis traité dans trois voies de commande 27, 28, 29.

La voie de commande 27 comporte un amplificateur-comparateur 30 qui reçoit sur une entrée inverseuse le signal I, pour mettre en évidence la composante négative du signal I, ainsi que le filtrage et la détection crête de cette composante afin d'élaborer le signal $I_d$ image de l'enveloppe du courant inverse. Le comparateur 30 compare le signal $I_d$ à un signal de référence $I_{REF}$ réglable obtenu à partir d'une tension fixe $V_{REF}$ au moyen d'un potentiomètre de réglage 31 et il génère un signal de sortie ST quand $I_d > I_{REF}$.

La voie de commande 28 comprend un amplificateur-comparateur 32 qui assure le filtrage et la détection crête du signal image du courant transistor $I_t$ et sa comparaison avec un seuil fixe fonction d'une tension $V_{REF}$. Le signal ST' résultant du dépassement du seuil par le signal $I_t$ est appliqué à une entrée d'une porte OU 33 dont l'autre entrée reçoit le signal ST. Le signal de sortie de la porte OU 33 transite par un élément de temporisation 34 pour être appliqué pendant une durée déterminée par cet élément aux premières entrées de portes ET 35, 36, 37 constituant l'organe de blocage assurant la diminution de tension recherchée. Des secondes entrées des portes ET 35, 36, 37 reçoivent respectivement les signaux S1, S3, S5, L'élément de temporisation est un circuit RC à charge rapide et décharge lente, mais il peut aussi être constitué par une bascule monostable ; il permet d'éviter d'imposer une trop forte fréquence de découpage aux transistors.

La voie de commande 29 présente un organe 38, par exemple un intégrateur ou organe analogue, établissant la valeur moyenne $\bar{I}_d$ du signal image du courant inverse $I_d$ et émettant, quand cette valeur moyenne devient supérieure à un seuil, un signal G d'inhibition du signal ST. Le signal G est par exemple transmis à l'amplificateur-comparateur 30. De la sorte, lorsque le moteur fonctionne en génératrice, le signal G inhibe l'apparition du signal ST et empêche ainsi le blocage des transistors T1, T3, T5 des voies hautes. Les comparateurs décrits peuvent être des opérateurs à seuil.

Le convertisseur de fréquence décrit fonctionne de la manière suivante : en cas de fonctionnement normal du moteur, le courant s'écoule dans la ligne 15 du circuit intermédiaire 12 comme indiqué par la flèche $i_t$ de la figure 1. Le circuit de commande reste inactif.

En cas d'oscillation ou d'instabilité due à une faible charge du moteur, il apparaît une composante inverse indiquée par la flèche $i_d$ de la figure 1. Le circuit de traitement 23 met donc en valeur le signal $I_d$ et le comparateur 24 - ou l'amplificateur 30 qui combine les fonctions de 23 et 24 - engendre une succession d'impulsions constituant le signal ST. Ces impulsions bloquent les portes 35- 37 et il en résulte le découpage supplémentaire C' des impulsions à largeur modulée P délivrées par le dispositif de commande 20 jusqu'à la disparition de l'instabilité relevée.

Lorsque le moteur fonctionne en génératrice, le signal $\bar{I}_d$ de valeur moyenne du courant $i_d$ atteint une valeur suffisante pour que le signal G change d'état et verrouille le comparateur 30, de sorte que le courant inverse peut s'écouler normalement vers le réseau triphasé.

Lorsqu'une forte variation de charge est détectée par la voie 28, le signal ST' change d'état et les voies hautes de l'onduleur sont bloquées comme dans le cas précédemment exposé d'une trop faible charge.

Comme on le sait, dans un convertisseur de fréquence du type décrit, le dispositif de commande 20 produit une modulation alternée de la conduction des interrupteurs du premier groupe T1, T3, T5, puis du deuxième groupe T2, T4, T6, puis à nouveau du premier groupe T1, T3, T5, etc..., les groupes de conducteurs 20H, 20B étant ainsi activés en alternance.

De préférence, le moyen 25 de diminution, des tensions de sortie délivrera les créneaux C' de diminution de tension également de manière alternée aux groupes d'interrupteurs modulants, c'est-à-dire de manière synchrone à la modulation acheminée par les groupes de conducteurs 20H, puis 20B, etc... De cette manière, on symétrise les courants du moteur et l'on réduit les effets fâcheux des courants diode parasites.

Le moyen 25 de diminution des tensions de sortie et éventuellement une partie des moyens de traitement 22 sont implémentés dans une même logique de commande, par exemple dans un même microprocesseur.

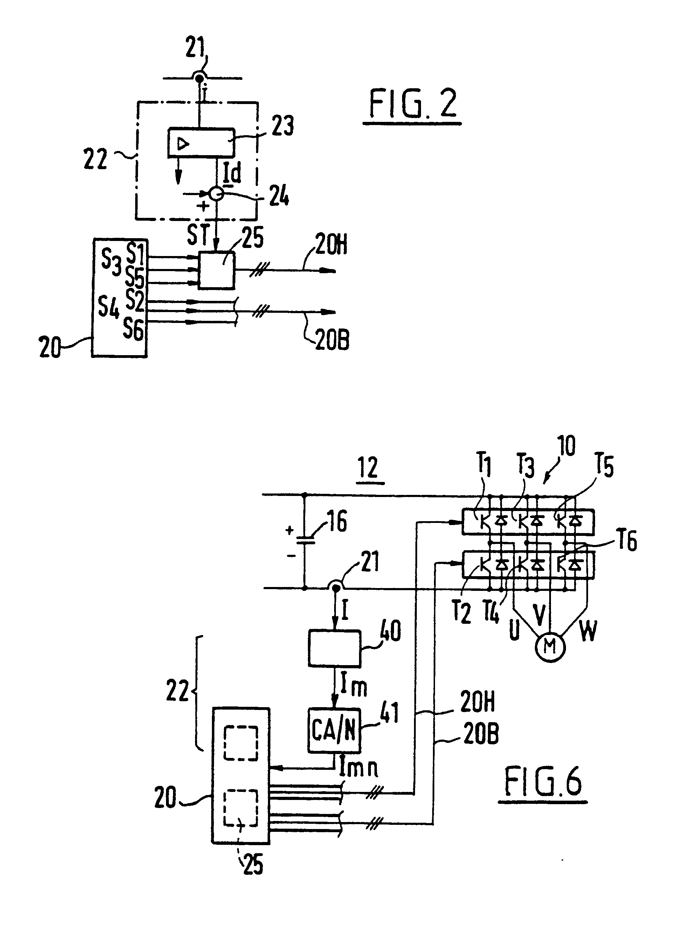

Dans l'exemple de réalisation de la figure 6, les moyens de traitement 22 comprennent un organe 40 établissant la valeur moyenne $I_m$ du signal I image du courant dans le circuit intermédiaire, ainsi qu'un convertisseur analogique-numérique 41 recevant le signal de valeur moyenne $I_m$ et délivrant un signal numérique $I_{mn}$.

Le moyen 25 de diminution de tension comporte un processeur muni de moyens d'échantillonnage du signal numérique $I_{mn}$ et de moyens d'évaluation de l'amplitude et/ou de la fréquence d'oscillation du signal $I_{mn}$.

Le dispositif de commande 20 est un microprocesseur qui comprend le moyen 25 de diminution de tension. Le microprocesseur 20 présente des moyens de commande de modulation pour moduler la conduction des interrupteurs T1-T6 ; les moyens d'évaluation d'oscillation interagissent sur les moyens de commande de modulation pour corriger la modulation en fonction de la valeur évaluée de l'oscillation du courant moyen dans le circuit intermédiaire. Les moyens inclus dans le microprocesseur 20 se présentent sous forme matérielle et logicielle.

**Revendications**

1. Convertisseur de fréquence pour l'alimentation d'un moteur du type asynchrone, comprenant :
   – un pont redresseur (11) susceptible d'être relié côté entrée à un réseau polyphasé et côté sortie à un circuit intermédiaire (12) de tension continue ;
   – un onduleur (13) susceptible d'être relié côté entrée au circuit intermédiaire et côté sortie aux impédances de phase d'un moteur asynchrone ;
   – l'onduleur comprenant trois couples d'interrupteurs statiques (T1-T6) aux bornes desquels est appliquée la tension continue, chaque couple comportant deux interrupteurs série dont l'un est dit de voie haute et l'autre dit de voie basse et qui sont munis chacun d'une diode de récupération (D1-D6) en parallèle, le point milieu de chaque couple (T1, T2 ; T3, T4 ; T5, T6) étant connecté à une impédance de phase du moteur ;

– un dispositif (20) de commande des interrupteurs étant relié à ceux-ci pour leur appliquer des impulsions modulées en vue d'assurer leur fermeture et leur ouverture ;

– un organe (21) de lecture du courant associé au circuit intermédiaire (12) de tension continue, et délivrant un signal (I) image du courant dans le circuit intermédiaire ;

– des moyens de traitement (22) reliés à l'organe de lecture (21) et agencés pour détecter des paramètres du signal (I) ; et

– un moyen (25) apte à agir sur le dispositif de commande (20) des interrupteurs statiques pour modifier les tensions de sortie de l'onduleur, en fonction des paramètres détectés par les moyens de traitement,

caractérisé par le fait que les susdits moyens de traitement (22) délivrent un signal d'excès de courant inverse (ST) et comprennent un circuit de traitement (23) relié à l'organe de lecture du courant (21) et élaborant un signal crête filtré ($I_d$) représentatif de la valeur crête du courant inverse et un comparateur (24) comparant ce signal ($I_d$) à une valeur de référence réglable ($I_{REF}$) pour générer quand $I_d > I_{REF}$ le signal (ST) d'excès de courant inverse, et en ce que le moyen (25) de modification des tensions de sortie de l'onduleur provoque un blocage alternatif du groupe d'interrupteurs de voie haute (T1, T3, T5) et/ou du groupe d'interrupteurs de voie basse (T2, T4, T6) de l'onduleur, lors de l'émission du signal (ST) d'excès de courant inverse.

2. Convertisseur de fréquence selon la revendication 1,
caractérisé par le fait que le susdit blocage alternatif s'effectue de façon synchrone à la modulation exercée sur chaque groupe d'interrupteurs.

3. Convertisseur de fréquence selon la revendication 1,
caractérisé par le fait qu'un élément de temporisation (34) est prévu pour maintenir pendant une durée déterminée le signal (ST) d'excès de courant inverse.

4. Convertisseur de fréquence selon la revendication 1,
caractérisé par le fait qu'il comprend un organe (38) établissant la valeur moyenne ($I_d$) du courant inverse et comparant cette valeur moyenne à un seuil déterminé, une entrée dudit organe (38) étant reliée à l'organe de lecture du courant (21), tandis qu'une sortie dudit organe (38) délivre un signal (G) d'inhibition du signal (ST) d'excès de courant inverse lors du fonctionnement du moteur en génératrice.

5. Convertisseur de fréquence selon la revendication 1,

caractérisé par le fait qu'un comparateur (32) est relié à l'organe de lecture du courant (21) et est agencé pour comparer un signal image du courant moteur ($I_t$) à une valeur de référence afin de délivrer un signal (ST') d'excès de courant moteur, les signaux (ST) d'excès de courant inverse et (ST') d'excès de courant moteur étant appliqués aux entrées d'une porte OU (33) dont la sortie est reliée via un élément de temporisation (34) au moyen (25) de diminution des tensions de sortie de l'onduleur.

6. Convertisseur de fréquence selon la revendication 1,
caractérisé par le fait que :

– les moyens de traitement (22) comprennent un organe (40) établissant la valeur moyenne ($I_m$) du signal (I) image du courant dans le circuit intermédiaire, ainsi qu'un convertisseur analogique-numérique (41) recevant le signal de valeur moyenne ($I_m$) et délivrant un signal numérique ($I_{mn}$) ;

– le moyen (25) de diminution de tension comprend un processeur muni de moyens d'échantillonnage du signal numérique ($I_{mn}$) et de moyens d'évaluation de l'amplitude et/ou de la fréquence d'oscillation du signal ($I_{mn}$) ;

– le dispositif de commande (20) comprend des moyens de commande de modulation pour moduler la conduction des interrupteurs (T1-T6) ;

– les moyens d'évaluation d'oscillation agissant sur les moyens de commande de modulation pour corriger ladite modulation en fonction de l'oscillation du courant moyen dans le circuit intermédiaire.

7. Convertisseur de fréquence selon la revendication 6,
caractérisé par le fait que le moyen (25) de diminution de tension et le dispositif de commande (20) sont implémentés dans un microprocesseur.

**Patentansprüche**

1. Frequenzwandler zur Speisung eines Motors des asynchronen Typs, mit :

– einer Gleichrichterbrücke (11), die auf der Eingangsseite an ein Mehrphasennetz und auf der Ausgangsseite an eine Gleichstromzwischenschaltung (12) angeschlossen ist ;

– einem Wechselrichter (13), der auf der Eingangsseite an die Zwischenschaltung und auf der Ausgangsseite an die Phasenimpendanzen eines Asynchronmotors angeschlossen werden kann ;

– wobei der Wechselrichter drei statische Schalterpaare (T1-T6) aufweist, an deren Klemmen die Gleichspannung angelegt wird, wobei jedes Paar zwei Serienschalter aufweist, deren einer als Schalter der oberen Bahn und der andere als Schalter der unteren Bahn bezeichnet wird und die jeweils mit einer parallelen Rückspeisungsdiode (D1-D6) versehen sind und der Mittelpunkt jedes Paares (T1, T2 ; T3, T4 ; T5, T6 ) an eine Phasenimpedanz des Motors angeschlossen ist ; und

– eine Steuervorrichtung (20) für die Schalter an diese angeschlossen ist und ihnen modulierte Pulse mitteilt, um ihre Schliessung und Öffnung zu bewirken ;

– einem, der Gleichstromzwischenschaltung (12) zugeordneten Stromableseorgan (21), welches ein Signal (I) abgibt, das den Strom in der Zwischenschaltung verschaulicht ;

– an das Ableseorgan (21) angeschlossenen Mitteln (22), die so ausgelegt sind, dass sie die Kennwerte des Signals (I) erfassen ; und

– einem Mittel (25), welches auf die Steuervorrichtung (20) für die statischen Schalter wirken kann, um die Ausgangsspannungen des Wechselrichters je nach den von den Verarbeitungsmitteln erfassten Kennwerten zu modulieren,

dadurch gekennzeichnet, dass besagte Verarbeitungsmittel (22) ein Gegenstromüberschussignal (ST) abgeben und einen an das Stromableseorgan (21) angeschlossenen Verarbeitungskreis (23) aufweisen, der ein gefiltertes, für den Spitzenwert des Gegenstroms typisches Signal (I$_d$) erzeugt, und einen Vergleicher (24), der dieses Signal (I$_d$) mit einem einstellbaren Referenzwert (I$_{REF}$) vergleicht, um, wenn I$_d$ > I$_{REF}$ ist, das Gegenstromüberschussignal (ST) zu erzeugen, und dass das Mittel (25) zur Andenrung der Ausgangsspannungen des Wechselrichters bei Abgabe des Gegenstromüberschussignals (ST) die abwechselnde Blockierung der Schaltergruppe der oberen Bahn (T1, T3, T5) und/oder der Schaltergruppe der unteren Bahn (T2, T4, T6) des Wechselrichters verursacht.

2. Frequenzwandler nach Anspruch 1, dadurch gekennzeichnet, dass besagte abwechselnde Blockierung synchron zu der auf jede Schaltergruppe ausgeübten Modulation erfolgt.

3. Frequenzwandler nach Anspruch 1, dadurch gekennzeichnet, dass ein Verzögerungselement (34) vorgesehen ist, um für eine vorbestimmte Dauer das Gegenstromüberschussignal (ST) aufrechtzuerhalten.

4. Frequenzwandler nach Anspruch 1, dadurch gekennzeichnet, dass er ein Organ (38) aufweist, welches den Durchschnittswert (I$_d$) des Gegenstroms erstellt und diesen Durchschnittswert mit einem vorbestimmten Schwellenwert vergleicht, wobei ein Eingang des besagten Organs (38) an das Stromableseorgan (21) angeschlossen ist, während ein ausgang des besagten Organs (38) ein Signal (G) abgibt, welches das Gegenstromüberschussignal (ST) hemmt, wenn der Motor als Generator arbeitet.

5. Frequenzwandler nach Anspruch 1, dadurch gekennzeichnet, dass ein Vergleicher (32) an das Stromableseorgan (21) angeschlossen und so ausgelegt ist, dass er ein den Motorstrom (I$_i$) veranschaulichendes Signal mit einem Referenzwert vergleicht, um ein Motorüberstromsignal (ST') abzugeben und die Gegenstromüberschuss- (ST) und Motorüberstrom- (ST') Signale an die Eingänge eines ODER-Tores (33) angelegt werden, dessen Ausgang durch ein Verzögerungselement (34) an das Mittel (25) zur Herabsetzung der Ausgangsspannungen des Wechselrichters angeschlossen ist.

6. Frequenzwandler nach Anspruch 1, dadurch gekennzeichnet, dass :

– die Verarbeitungsmittel (22) ein Organ (40) aufweisen, welches den Durchschnittswert (I$_m$) des den Strom in der Zwischenschaltung veranschaulichenden Signals (I) erstellt, sowie einen Analog-Digital-Umsetzer (41), welcher das Durchschnittswertsignal (I$_m$) erhält und ein Digitalsignal (I$_{mn}$) abgibt ;

– das Mittel (25) zur Herabsetzung der Spannung einen Prozessor aufweist, mit Mitteln zum Abtasten des Digitalsignals (I$_{mn}$) und Mitteln zur Schätzung der Schwingweite und -frequenz des Signals (I$_{mn}$) ;

– die Steuervorrichtung (20) Mittel zur Modulationssteuerung aufweist, um die Leitung der Schalter (T1 - T6) zu modulieren ;

– die Mittel zur Schwingungsabschätzung auf die Mittel zur Modulationssteuerung wirken, um besagte Modulation je nach der Schwingung des durchschnittlichen Stromes in der Zwischenschaltung zu korrigieren.

7. Freuquenzwandler nach Anspruch 6, dadurch gekennzeichnet, dass das Mittel (25) zur Herabsetzung der Spannung und die Steuervorrichtung (20) in einem Mikroprozessor angeordnet sind.

**Claims**

1. Frequency converter for the power supply of an asynchronous type motor, comprising :
   – a rectifier bridge (11) connectable on the input side to a multiphase network and on the output side to an intermediate DC circuit (12) ;
   – an inverter (13) connectable on the input side to the intermediate circuit and on the output side to the phase impedances of an asynchronous motor ;
   – the inverter comprising three pairs of static switches (T1-T6) to the terminals of which the DC voltage is applied, each pair including two series switches one of which is said to be high channel and the other low channel and which are each provided with a recovery diode (D1-D6) in parallel, the middle point of each pair (T1,T2;T3,T4;T5,T6) being connected to a phase impedance of the motor ;

– a device (20) for controlling the switches being connected thereto for applying thereto modulated pulses for ensuring closure and opening thereof ;

– a means (21) for reading the current associated with the intermediate DC circuit (12) and delivering a signal (I) which is the image of the current in the intermediate circuit ;

– a processing means (22) connected to the reading means (21) and adapted for detecting signal (I) parameters ; and

– a means (25) adapted for acting on the control device (20) for the static switches, for modifying the output voltages of the inverter, as a function of the parameters detected by the processing means,

characterized by the fact that said processing means (22) deliver a reverse current excess signal (ST) and include a processing circuit (23) connected to the current reading means (21) and providing a filtered peak signal ($I_d$) representative of the peak value of the reverse current and a comparator (24) comparing said signal ($I_d$) with an adjustable reference value ($I_{REF}$) for generating, when $I_d > I_{REF}$ the reverse current excess signal (ST), and in that the means (25) for modifying the output voltages of the inverter causes an alternative disabling of the group of the high channel switches (T1,T3,T5) and/or of the group of low channel switches (T2,T4,T6) of the inverter during emission of a reverse current excess signal (ST).

2. Frequency converter according to claim 1, characterized in that said alternative disabling is realized synchronously with the modulation exerted on each group of switches.

3. Frequency converter according to claim 1, characterized in that a delay element (34) is provided for maintaining the reverse current excess signal (ST) for a given time.

4. Frequency converter according to claim 1, characterized in that it comprises a means (38) for establishing the mean value ($I_d$) of the reverse current and comparing this mean value with a given threshold, one input of said means (38) being connected to the current reading means (21), whereas an output of said means (38) delivers a signal (G) inhibiting the reverse current excess signal (ST) when the motor operates as a generator.

5. Frequency converter according to claim 1, characterized in that a comparator (32) is connected to the current reading means (21) and is adapted for comparing a signal, image of the motor current ($I_t$) with a reference value so as to deliver a motor current excess signal (ST'), the reverse current excess (ST) and motor current excess (ST') signals being applied to the inputs of an OR gate (33) whose output is connected via a delay element (34) to the means (25) reducing the output voltages of the inverter.

6. Frequency converter according to claim 1, characterized in that :

– the processing means (22) comprise a means (40) establishing the mean value ($I_m$) of the signal (I)image of the current in the intermediate circuit, as well as an A-D converter (41) receiving a mean value signal ($I_m$) and delivering a digital signal ($I_{mn}$) ;

– the voltage reduction means (25) include a processor having means for sampling the digital signal ($I_{mn}$) and means for evaluating the amplitude and/or the frequency of oscillation of the signal ($I_{mn}$);

– the control device (20) comprises modulation control means for modulating the conduction of the switches (T1-T6) ;

– the oscillation evaluation means acting on the modulation control means for correcting said modulation as a function of the oscillation of the mean current in the intermediate circuit.

7. Frequency converter according to claim 6, characterized in that the voltage reduction means (25) and the control device (20) are implemented in a microprocessor.

FIG.1

FIG.2A

FIG.2B

FIG.2C

FIG.3

FIG. 4

FIG. 5

FIG. 2

FIG.6